# EUROPEAN PATENT SPECIFICATION

(11) **EP 4 166 008 B1**
(45) Date of publication and mention of the grant of the patent: **05.11.2025**
(21) Application number: 20939881.7
(22) Date of filing: 03.09.2020
(51) Int. Cl.: A23L 19/18, A23P 20/25, A23P 20/10, A23L 5/10

(54) **METHOD FOR PREPARING FRIED POTATOES AND FRIED POTATOES OBTAINED USING SAID METHOD**
VERFAHREN ZUR HERSTELLUNG VON FRITTIERTEN KARTOFFELN UND DURCH DIESES VERFAHREN ERHALTENE FRITTIERTE KARTOFFELN
PROCÉDÉ DE PRÉPARATION DE POMMES DE TERRE FRITES ET POMMES DE TERRE FRITES OBTENUES AU MOYEN DUDIT PROCÉDÉ

(30) Priority: 10.06.2020 ES 202030562
(43) Date of publication of application: 19.04.2023
(73) Proprietor: Capdevila Espeja, Antonio, 50018 Zaragoza (ES)
(72) Inventor: Capdevila Espeja, Antonio, 50018 Zaragoza (ES)
(74) Representative: Herrero & Asociados, S.L.
(86) International application number: PCT/ES2020/070528
(87) International publication number: WO 2021/250294

(56) References cited:
- WO-A1-03/043443
- DE-A1- 19 842 546
- DE-A1- 19 859 362
- DE-A1- 19 859 362
- ES-A1- 2 701 379
- ES-A1- 2 701 379
- FR-A1- 2 596 958
- FR-A1- 2 596 958
- FR-A1- 2 715 045
- FR-A1- 2 715 045
- US-A- 2 597 065

## Description

### OBJECT OF THE INVENTION

The present invention relates to a process for the preparation of potato crisps and to potato crisps obtained by this process. It falls within the technical field of the food industry.

### BACKGROUND OF THE INVENTION

Nowadays the preparation of French fries, especially in food establishments, involves frying potatoes in portions, either by cutting the portions on site from whole potatoes after peeling, usually, or more frequently, especially in fast food establishments, by frying on site portions of whole potatoes previously cut into strips or wedges (and peeled if necessary), and frozen.

This approach limits the possibility of enhancing the flavour of the chips obtained by additives.

In order to overcome this drawback, the applicant also holds invention patent P201731042, relating to a process for the preparation of French fries and to French fries obtained by said process, where the process comprises the following steps carried out in a central kitchen:
- shape by cutting whole potatoes into potato wedges,
- fry the potato wedges,
- inject one or more sauces to the fried potato wedges,
- freeze the potato portions chopped, fried and injected with one or more sauces; and
- packaging for distribution;

comprising a preparation stage at the place of consumption comprising heating the potato wedges, frying them, injecting them with one or more sauces and freezing them;
and where the potato crisps obtained, comprising heated potato portions, previously obtained by cutting up whole potatoes, frying and injecting them with one or more sauces, are preferably in the form of wedges, and the sauces used could be any, for example:
   - sweet sauces,
   - savoury sauces,
   - sweet and sour sauces,
cheese-based sauces (Cheddar, Cabrales, etc.),
   - spicy sauces.

DE 198 59 362 A1 discloses a fried potato stick (potatochip) having an edible filling, wherein the potato stick can be designed with a blind hole extending from one end, which is filled with the edible filling and which is closed at the said end with a stopper (cap) made of potato material. It further discloses that the potato sticks are shock-frozen after frying.

This invention makes it possible to add different flavours to the potatoes, with the additional advantage that the final preparation of the potatoes on site is much quicker, as it only requires heating, not frying.

However, sometimes during the preparation stage at the place of consumption, which involves heating the portions of sliced, fried, injected with one or more sauces and frozen potatoes, excessive heat during this stage could cause the filling to come out due to too rapid a rise in temperature, which makes it necessary to be careful and to carefully control the temperature at this stage.

This drawback is solved by using the process of this invention, which results in a potato that has better properties against this problem.

### DESCRIPTION OF THE INVENTION

The process for preparation of French fries of the invention comprises the following stages carried out in a central kitchen:
a) heat treatment of the potato by single-layer immersion cooking, vacuum cooking or steaming, at a temperature of between 80-90°C for 7 minutes,
b) subject the potato heated in a) to a scan to record its shape and size,
c) determine the optimum position of some cuts on the potato model obtained in b) in order to subsequently form a selected number of portions,
d) determine on each predetermined portion obtained in c) the position of a hole with a single-entry hole, to be filled later,
e) carry out the mechanical emptying of the identified holes in d) by means of a tubular blade to retain inside the potato body or core corresponding to the hole when exiting, recovering a lid for each hole by recovering one of the ends of the extracted core,
f) inject or mechanically insert a filler into each hole obtained in e), and plugging each hole with the corresponding lid,
g) carry out the mechanical cutting of the injected potato into pre-determined portions, without affecting the determined hollows and filling,
h) pre-fry the portions obtained in g),
i) cool and deep-freeze of stuffed and pre-fried portions obtained in h), and
j) pack already deep-frozen portions, and store and transport to the place of final preparation under appropriate refrigeration conditions; comprising a preparation step of the packed portions at the place of consumption,
wherein said preparation step comprises heating the frozen, pre-fried and deep-frozen injected portions; and wherein a granular or powdery coating is applied to the portions before the pre-frying step h).

The French fries of the invention are characterised in that they comprise wedge-shaped potato portions having a cooked inner texture obtained by steaming at 80-90ºC for at least 5 minutes and a pre-fried outer texture with a granular or powdery coating, said portions comprising a hole with a single-entry hole, a filling and a potato lid obtained from the extracted core.

The potatoes, prior to the start of the process, are received, for example, in large bags of 1000 kgs, and are stored at a maximum temperature of 5-10 degrees for a maximum of 72 hours before entering the production line, for example by forklift truck or overhead crane, from where they are unloaded into the feed hopper of the cooking line. For its part, packaging for distribution can be done in different formats: for the mass distribution channel, catering and private individuals and any other sector that may require it, while the heating corresponding to the preparation at the place of consumption can be done by any usual means in the kitchen: oven, microwave oven, immersion in oil, hot display case or vending machine, etc.

The filler can be any flavoured preparation or mixture of substances, whether in liquid, viscous, semi-viscous, solid or semi-solid form, capable of being injected or introduced mechanically.

With the process we obtain potato portions with or without skin and heated, previously obtained by heat treatment of single-layer immersion cooking, vacuum cooking or steaming, scanning by artificial vision to record their shape and size , determination on the model of the optimum position of the cuts to form a selected number of segments and the position on each portion of a hole with a single entrance hole, injecting or mechanically inserting each hole with a filling and covering the entrance hole with a potato lid recovered when the hole was made, cutting the portions, wrapping them in spicy coating and pre-frying them, deep-freezing the portions and packaging them for preservation and transport to the place of heating for consumption, achieving subsequent rehydration in a frying pan, fryer, oven or microwave oven, hot display case or vending machine, practically immediately. This results in an explosion of flavour on the consumer's palate.

### DESCRIPTION OF A PRACTICAL EMBODIMENT OF THE INVENTION

The process for preparation of French fries of the invention comprises the following stages carried out in a central kitchen:
a) heat treatment of the potato by single-layer immersion cooking, vacuum cooking or steaming, at a temperature of between 80-90°C for 7 minutes,
b) subject the potato heated in a) to a scan to record its shape and size,
c) determine the optimum position of some cuts on the potato model obtained in b) in order to subsequently form a selected number of portions,
d) determine on each predetermined portion obtained in c) the position of a hole with a single-entry hole, to be filled later,
e) carry out the mechanical emptying of the identified holes in d) by means of a tubular blade to retain inside the potato body or core corresponding to the hole when exiting, recovering a lid for each hole by recovering one of the ends of the extracted core,
f) inject or mechanically insert a filler into each hole obtained in e), and plugging each hole with the corresponding lid,
g) carry out the mechanical cutting of the injected potato into pre-determined portions, without affecting the determined hollows and filling, h) pre-fry the portions obtained in g), i) cool and deep-freeze of stuffed and pre-fried portions obtained in h), and
j) pack already deep-frozen portions, and store and transport to the place of final preparation under appropriate refrigeration conditions; comprising a preparation step of the packed portions at the place of consumption,
wherein said preparation step comprises heating the frozen, pre-fried and deep-frozen injected portions; and wherein a granular or powdery coating is applied to the portions before the pre-frying step h).

A granular or powdery coating is applied to the portions before the pre-frying step, as this increases their resistance to the pressure increase that can occur in the filling due to heating during pre-frying, preventing the filling from slipping out. Such coating comprises e.g. a mixture of spices and/or vegetable flours which also improves the taste.
Ideally, the immersion cooking heat treatment is carried out with the potato unpeeled, reducing processing costs and improving flavour and image, as the skin is incorporated into the final product. This single-layer immersion cooking, vacuum cooking or steaming heat treatment is carried out at a temperature of between 80-90 degrees Celsius for 7 minutes, which preserves the skin of the product intact.

The mechanical emptying of the hollows is carried out by means of a tubular blade, which, on descending, carves the potato and retains the body or core of the potato corresponding to the hollow when the blade comes out; while the recovery of the lid for the hollow is carried out by recovering one of the ends of the extracted core.

The cuts that determine the portions are made by means of a single cut with a guillotine with radial branches, circular blades or metal wire, obtaining wedge-shaped portions, as this is carried out in a single operation. Ideally, the tubular blade and the guillotine with radial branches, circular blades or metal wire, move vertically over each potato to be processed. Likewise, with this arrangement, the injection of the filling can be carried out by means of an injector needle with a movement in the same direction as that of the tubular blade (vertical).

As for the pre-frying stage, it is carried out by means of a continuous fryer, allowing the implementation of a continuous production line, and the deep-freezing of the potato portions is carried out at a temperature of at least -35 degrees, also preferably in a spiral freezing tunnel, or in a continuous freezer.

The filler, on the other hand, can be based on:
- sweet sauces,
- savoury sauces,
- sweet and sour sauces,
   cheese-based sauces,
- spicy sauces.
- cheese creams
- creams of all kinds of foodstuffs.
- Fruit crushing
- Chocolates.

The product obtained is potato crisps comprising heated potato portions, previously obtained by heat treatment of single-layer immersion cooking, vacuum cooking or steaming, scanning to record their shape and size, determination on the model of the optimum position of the cuts to form a selected number of segments and of the position on each portion of a hole with a single inlet hole, injecting or mechanically inserting of each recess with a filler and plugging of the inlet hole by means of a potato lid recovered when the recess is made, cutting of the portions such portions are ideally wedge-shaped, and may or may not comprise a granular or powdery coating, which may be a mixture of spices and/or vegetable flours and pre-frying of the same, deep-freezing of the portions and packaging for preservation and transport to the place of heating for consumption.

The filling of the portions can be based on:
- sweet sauces,
- savoury sauces,
- sweet and sour sauces,
   cheese-based sauces (Cheddar, Cabrales, etc.),
- spicy sauces.
- cheese creams
- creams of all kinds of foodstuffs.
- Fruit crushing
- Chocolates.

## Claims

1. Procedure for the preparation of French fries **characterised in that** it comprises the following sequence of steps carried out in a central kitchen:
a) heat treatment of the potato by single-layer immersion cooking, vacuum cooking or steaming, at a temperature of between 80-90°C for 7 minutes,
b) subject the potato heated in a) to a scan to record its shape and size.
c) determine the optimum position of some cuts on the potato model obtained in b) in order to subsequently form a selected number of portions,
d) determine on each predetermined portion obtained in c) the position of a hole with a single-entry hole, to be filled later,
e) carry out the mechanical emptying of the identified holes in d) by means of a tubular blade to retain inside the potato body or core corresponding to the hole when exiting, recovering a lid for each hole by recovering one of the ends of the extracted core,
f) inject or mechanically insert a filler into each hole obtained in e), and plugging each hole with the corresponding lid,
g) carry out the mechanical cutting of the injected potato into pre-determined portions, without affecting the determined hollows and filling,
h) pre-fry the portions obtained in g),
i) cool and deep-freeze of stuffed and pre-fried portions obtained in h), and
j) pack already deep-frozen portions, and store and transport to the place of final preparation under appropriate refrigeration conditions;
comprising a preparation step of the packed portions at the place of consumption, wherein said preparation step comprises heating the frozen, pre-fried and deep-frozen injected portions; and
wherein a granular or powdery coating is applied to the portions before the pre-frying step h).

2. Procedure for the preparation of French fries according to claim 1 **wherein** the coating comprises a mixture of spices and/or vegetable flours.

3. Procedure for the preparation of French fries according to any of the previous claims, **where** the cuts that determine the portions (step g) are made by means of a single cut with a guillotine with radial branches, circular blades or metallic threads, obtaining wedge-shaped portions.

4. Procedure for the preparation of French fries according to claim 1 **where** the tubular blade and the guillotine with radial branches, circular blades or metal wires have vertical movement over each potato to be processed.

5. Procedure for the preparation of French fries according to claim 1 **where** the injection or mechanical introduction of the filling (step f) is carried out by means of an injection needle with a movement in the same direction as that of the tubular blade.

6. Procedure for the preparation of French fries according to any of the previous claims, **where** the pre-frying step (h) is carried out by means of a continuous fryer.

7. Procedure for the preparation of French fries according to any of the previous claims **where** the deep-freezing of the potato portions (step i) is carried out at a temperature of at least -35 degrees.

8. Procedure for the preparation of French fries according to any of the previous claims, **where** the deep-freezing of the potato portions (step i) is carried out in a spiral freezing tunnel, or in a continuous freezing process.

9. Procedure for the preparation of French fries according to any of the preceding claims **wherein** the filling is selected from:
- sweet sauces,
- savoury sauces,
- sweet and sour sauces,
- cheese-based sauces,
- spicy sauces.
- cheese creams
- creams of all kinds of foodstuffs.
- Fruit crushing, and
- Chocolates.

10. French fries **characterised in that they** comprise wedge-shaped potato portions having a cooked inner texture obtained by steaming at 80-90°C for at least 7 minutes and a pre-fried outer texture with a granular or powdery coating, said portions comprising a hole with a single-entry hole, a filling and a potato lid obtained from the extracted core.

11. French fries according to claim 10 **wherein** the coating is a mixture of spices and/or vegetable flours.

12. French fries according to any one of claims 10 or 11, **wherein** the filling is selected from:
- sweet sauces,
- savoury sauces,
- sweet and sour sauces,
cheese-based sauces,
- spicy sauces.
- cheese creams
- creams of all kinds of foodstuffs.
- Fruit crushing, and
- Chocolates.

## Patentansprüche

1. Verfahren zur Zubereitung von Pommes frites, **dadurch gekennzeichnet, dass** es die folgende Abfolge von Schritten umfasst, die in einer Zentralküche durchgeführt werden:
a) Wärmebehandlung der Kartoffel durch einlagiges Eintauchen-Garen, Vakuumgaren oder Dämpfen bei einer Temperatur zwischen 80 und 90 °C für 7 Minuten,
b) Scannen der in a) erhitzten Kartoffel, um ihre Form und Größe zu erfassen.
c) Bestimmen der optimalen Position einiger Schnitte auf dem in b) erhaltenen Kartoffelmodell, um anschließend eine ausgewählte Anzahl von Portionen zu bilden,
d) Bestimmen der Position eines Lochs mit einem einzigen Einlass, das später gefüllt werden soll, auf jeder in c) erhaltenen vorbestimmten Portion,
e) mechanisches Entleeren der in d) identifizierten Löcher mit Hilfe einer röhrenförmigen Klinge, um den dem Loch entsprechenden Teil des Kartoffelkörpers oder -kerns beim Austreten im Inneren zu halten, Wiederherstellen eines Deckels für jedes Loch durch die Wiederherstellung eines der Enden des entnommenen Kerns,
f) Einspritzen oder mechanisches Einbringen eines Füllstoffs in jedes in e) erhaltene Loch und Verschließen jedes Lochs mit dem entsprechenden Deckel,
g) Durchführen des mechanischen Schneidens der eingespritzten Kartoffel in vorbestimmte Portionen, ohne die festgelegten Hohlräume und Füllungen zu beeinträchtigen,
h) Vorbraten der in g) erhaltenen Portionen,
i) Kühlen und Tiefgefrieren der in h) erhaltenen gefüllten und vorgebratenen Portionen und
j) Verpacken der bereits tiefgefrorenen Portionen und Lagern und Transportieren zum Ort der endgültigen Zubereitung unter geeigneten Kühlbedingungen;
umfassend einen Zubereitungsschritt der verpackten Portionen am Ort des Verzehrs, wobei dieser Zubereitungsschritt das Erhitzen der gefrorenen, vorgebratenen und tiefgefrorenen gespritzten Portionen umfasst; und
wobei vor dem Vorbratschritt h) eine körnige oder pulverförmige Beschichtung auf die Portionen aufgebracht wird.

2. Verfahren zur Zubereitung von Pommes frites gemäß Anspruch 1, wobei die Beschichtung eine Mischung aus Gewürzen und/oder pflanzlichen Mehlen umfasst.

3. Verfahren zur Zubereitung von Pommes frites gemäß einem der vorhergehenden Ansprüche, **wobei** die Schnitte, die die Portionen bestimmen (Schritt g), durch einen einzigen Schnitt mit einer Guillotine mit radialen Armen, kreisförmigen Klingen oder Metallfäden ausgeführt werden, wodurch keilförmige Portionen erhalten werden.

4. Verfahren zur Zubereitung von Pommes frites gemäß Anspruch 1, **wobei** die röhrenförmige Klinge und die Guillotine mit radialen Armen, kreisförmigen Klingen oder Metalldrähten eine vertikale Bewegung über jeder zu verarbeitenden Kartoffel ausführen.

5. Verfahren zur Zubereitung von Pommes frites gemäß Anspruch 1, **wobei** das Einspritzen oder mechanische Einbringen der Füllung (Schritt f) mittels einer Einspritznadel mit einer Bewegung in derselben Richtung wie die der röhrenförmigen Klinge durchgeführt wird.

6. Verfahren zur Zubereitung von Pommes frites gemäß einem der vorhergehenden Ansprüche, **wobei** der Vorbratschritt (h) mittels einer Durchlauf-Fritteuse durchgeführt wird.

7. Verfahren zur Zubereitung von Pommes frites gemäß einem der vorhergehenden Ansprüche, **wobei** das Tiefgefrieren der Kartoffelportionen (Schritt i) bei einer Temperatur von mindestens -35 Grad durchgeführt wird.

8. Verfahren zur Zubereitung von Pommes frites gemäß einem der vorhergehenden Ansprüche, **wobei** das Tiefgefrieren der Kartoffelportionen (Schritt i) in einem Spiralgefriertunnel oder in einem kontinuierlichen Gefrierprozess durchgeführt wird.

9. Verfahren zur Zubereitung von Pommes frites gemäß einem der vorhergehenden Ansprüche, **wobei** die Füllung ausgewählt wird aus:
- süßen Soßen,
- herzhaften Soßen,
- süß-sauren Soßen,
- Soßen auf Käsebasis,
- scharfen Soßen.
- Käsecremes
- Cremes aus allen Arten von Lebensmitteln.
- Fruchtpüree und
- Schokoladen.

10. Pommes frites, **dadurch gekennzeichnet, dass** sie keilförmige Kartoffelportionen mit einer gegarten Innentextur, die durch Dämpfen bei 80-90 °C für mindestens 7 Minuten erhalten ist, und einer vorgebratenen Außentextur mit einer körnigen oder pulverförmigen Beschichtung umfassen, wobei diese Portionen ein Loch mit einem einzigen Einlass, eine Füllung und einen Kartoffeldeckel umfassen, der aus dem entnommenen Kern gewonnen ist.

11. Pommes frites nach Anspruch 10, **wobei** die Beschichtung eine Mischung aus Gewürzen und/oder pflanzlichen Mehlen ist.

12. Pommes frites nach einem der Ansprüche 10 oder 11, **wobei** die Füllung ausgewählt ist aus:
- süßen Soßen,
- herzhaften Soßen,
- süß-sauren Soßen,
Soßen auf Käsebasis,
- scharfen Soßen.
- Käsecremes
- Cremes aus allen Arten von Lebensmitteln.
- Fruchtpüree und
- Schokoladen.

## Revendications

1. Procédé de préparation de frites **caractérisé en ce qu'**il comprend la séquence d'étapes suivante, effectuée dans une cuisine centrale :
a) traitement thermique de la pomme de terre par cuisson par immersion en une seule couche, cuisson sous vide ou cuisson à la vapeur, à une température comprise entre 80 et 90 °C pendant 7 minutes,
b) soumettre la pomme de terre chauffée à l'étape a) à un scan pour enregistrer sa forme et sa taille,
c) déterminer la position optimale de certaines coupes sur le modèle de pomme de terre obtenu à l'étape b) afin de former ensuite un nombre sélectionné de portions,
d) déterminer sur chaque portion prédéterminée obtenue à l'étape c) la position d'un trou à entrée unique, à remplir ultérieurement,
e) vider de manière mécanique les trous identifiés à l'étape d) au moyen d'une lame tubulaire afin de retenir à l'intérieur la chair ou le cœur de la pomme de terre correspondant au trou à la sortie, et récupérer un couvercle pour chaque trou en récupérant l'une des extrémités du cœur extrait,
f) injecter ou insérer mécaniquement une substance de remplissage dans chaque trou obtenu à l'étape e), et boucher chaque trou avec le couvercle correspondant,
g) effectuer la coupe mécanique de la pomme de terre injectée en portions prédéterminées, sans toucher aux trous et à la substance de remplissage déterminés,
h) préfrire les portions obtenues à l'étape g),
i) refroidir et congeler les portions fourrées et préfrites obtenues à l'étape h), et
j) emballer les portions déjà congelées, puis les stocker et les transporter jusqu'au lieu de préparation finale dans des conditions de réfrigération appropriées ; comprenant une étape de préparation des portions emballées sur le lieu de consommation, dans laquelle ladite étape de préparation comprend le réchauffement des portions injectées, préfrites et congelées ; et dans laquelle un enrobage granuleux ou poudreux est appliqué sur les portions avant l'étape h) de préfriture.

2. Procédé de préparation de frites selon la revendication 1, **dans lequel** l'enrobage comprend un mélange d'épices et/ou de farines végétales.

3. Procédé de préparation de frites selon l'une quelconque des revendications précédentes, **dans lequel** les coupes qui déterminent les portions (étape g) sont réalisées au moyen d'une seule coupe avec une guillotine à branches radiales, à lames circulaires ou à fils métalliques, obtenant des portions en forme de quartier.

4. Procédé de préparation de frites selon la revendication 1, **dans lequel** la lame tubulaire et la guillotine à branches radiales, à lames circulaires ou à fils métalliques effectuent un mouvement vertical sur chaque pomme de terre à traiter.

5. Procédé de préparation de frites selon la revendication 1, **dans lequel** l'injection ou l'introduction mécanique de la substance de remplissage (étape f) est effectuée au moyen d'une aiguille d'injection, avec un mouvement dans le même sens que celui de la lame tubulaire.

6. Procédé de préparation de frites selon l'une quelconque des revendications précédentes, **dans lequel** l'étape de préfriture (h) est réalisée au moyen d'une friteuse en continu.

7. Procédé de préparation de frites selon l'une quelconque des revendications précédentes, **dans lequel** la congélation des portions de pommes de terre (étape i) est effectuée à une température d'au moins -35 degrés.

8. Procédé de préparation de frites selon l'une quelconque des revendications précédentes, **dans lequel** la congélation des portions de pommes de terre (étape i) est effectuée dans un tunnel de congélation en spirale ou à l'aide d'un processus de congélation en continu.

9. Procédé de préparation de frites selon l'une quelconque des revendications précédentes, **dans lequel** la substance de remplissage est sélectionnée parmi les suivantes :
- sauces sucrées,
- sauces salées,
- sauces aigres-douces,
- sauces à base de fromage,
- sauces épicées,
- crèmes de fromage,
- crèmes à base de toutes sortes d'aliments,
- Fruits broyés, et
- Chocolats.

10. Frites **caractérisées en ce qu'elles** comprennent des portions de pommes de terre en forme de quartiers, ayant une texture interne cuite obtenue par cuisson à la vapeur à une température comprise entre 80 et 90 °C pendant au moins 7 minutes et une texture externe préfrite avec un enrobage granuleux ou poudreux, lesdites portions comprenant un trou à entrée unique, une substance de remplissage et un couvercle de pomme de terre obtenu à partir du cœur extrait.

11. Frites selon la revendication 10, **dans lesquelles** l'enrobage est un mélange d'épices et/ou de farines végétales.

12. Frites selon l'une quelconque des revendications 10 ou 11, **dans lesquelles** la substance de remplissage est sélectionnée parmi les suivantes :
- sauces sucrées,
- sauces salées,
- sauces aigres-douces, sauces à base de fromage,
- sauces épicées,
- crèmes de fromage,
- crèmes à base de toutes sortes d'aliments,
- Fruits broyés, et
- Chocolats.
